# EUROPÄISCHE PATENTSCHRIFT

(11) **EP 2 181 275 B1**
(45) Veröffentlichungstag und Bekanntmachung des Hinweises auf die Patenterteilung: **20.07.2011**
(21) Anmeldenummer: 08787160.4
(22) Anmeldetag: 13.08.2008
(51) Int. Cl.: F16F 9/38

(54) **SCHUTZROHR FÜR EIN KOLBEN-ZYLINDERAGGREGAT**
PROTECTIVE PIPE FOR A PISTON/CYLINDER UNIT
TUBE PROTECTEUR POUR ENSEMBLE PISTON-CYLINDRE

(30) Priorität: 28.08.2007 DE 102007040455; 05.08.2008 DE 102008040984
(43) Veröffentlichungstag der Anmeldung: 05.05.2010
(73) Patentinhaber: ZF Friedrichshafen AG, 88038 Friedrichshafen (DE)
(72) Erfinder: HANDKE, Günther, 97502 Euerbach (DE); MILLER, Alexander, 96123 Litzendorf (DE)
(86) Internationale Anmeldenummer: PCT/EP2008/060609
(87) Internationale Veröffentlichungsnummer: WO 2009/027228

(56) Entgegenhaltungen:
- DE-A1- 2 850 051
- DE-A1- 3 735 058
- DE-U- 1 951 753
- DE-U- 1 951 754
- DE-U1- 8 228 262
- JP-A- 2001 108 005
- JP-A- 2006 234 068
- US-A- 4 372 429

## Beschreibung

### Technisches Gebiet

Die Erfindung betrifft ein Schutzrohr für ein Kolben-Zylinderaggregat gemäß dem Oberbegriff von Patentanspruch 1.

### Stand der Technik

Eine Kolbenstange eines Kolben-Zylinderaggregates stellt ein Bauteil dar, dessen Oberfläche unbedingt gegen Schmutz geschützt werden muss, damit eine einen Zylinder verschließende Dichtung nicht durch feine Partikel im Schmutz zerstört wird.

Aus Gewichtsgründen haben sich Schutzrohre aus Kunststoff durchgesetzt. Das Schutzrohr verfügt über einen Boden, der sich vielfach auf einem Absatz der Kolbenstange abstützt. Häufig wird der Boden als metallische kreisringförmige Scheibe hergestellt, die mit einem Kunststoffrohr eine Formschlussverbindung eingeht. Der metallische Boden sorgt für eine gute Formstabilität des Kunststoffrohres, verteuert jedoch das Schutzrohr erheblich. In diesem Zusammenhang wird auf die DE 28 50 051 A1; DE 19 51 753 U oder die DE 19 51 754 U verwiesen.

Die gattungsbildende DE 37 35 058 A1 offenbart mit der Ausführung nach Fig. 2 ein einteiliges, aus einem Kunststoff gefertigtes Schutzrohr. Ausgehend von einem Nenndurchmesser weist das Schutzrohr einen nach radial innen verlaufenden konischen Übergangsbereich auf, der in eine horizontal verlaufenden Spannfläche mündet, die auf einem Absatz der Kolbenstange anliegt. Dieses vollständig aus Kunststoff gefertigte Schutzrohr verfügt einerseits über einen Kostenvorteil, im Hinblick auf die Formstabilität kann es jedoch die Eigenschaften eines Schutzrohres mit metallischem Boden nicht erreichen.

Ergänzend wäre noch die DE 82 28 262 U1 zu nennen, die in der Fig. 1 ebenfalls ein einteiliges Kunststoffschutzrohr offenbart, das auf einem Längenabschnitt im Bereich eines Anschraubteils parallel zur Kolbenstange verläuft und sich damit radial zentriert.

### Darstellung der Erfindung

Aufgabe der vorliegenden Erfindung ist es, ein Schutzrohr für ein Kolben-Zylinderaggregat zu realisieren, das vollständig aus Kunststoff besteht und hinsichtlich der Formstabilität optimiert ist.

Erfindungsgemäß wird die Aufgabe dadurch gelöst, dass ein konischer Flächenbereich des flaschenhalsförmigen Bodens ausgehend von seinem äußeren Rand nach radial innen eine zunehmende Materialanhäufung aufweist.

Der im Hinblick auf eine Biegebelastung verstärkte Boden sorgt dafür, dass auch bei einer Radialbelastung des Schutzrohres keine kritische Formabweichung auftritt. Dieses Betriebsverhalten erleichtert die Verwendung eines einteiligen Schutzrohres, das, wie bereits erwähnt, einen deutlichen Kostenvorteil im Vergleich zu einer mehrteiligen Lösung aufweist.

Bei einer ersten Variante ist vorgesehen, dass die Wandstärke des Bodens nach radial innen zunimmt. Dabei verläuft die Innenseite rechtwinklig zur Kolbenstangenlängsachse.

Zusätzlich kann die Wandstärke des Rohrkörpers in Richtung des Bodens zunehmen. Gerade am Übergangsbereich vom Boden zum Rohrkörper stellt sich mit diesem technischen Detail eine deutliche Stabilisierung des Schutzrohres gegen Biegekräfte ein.

Je nach Bauraumvorgaben für das Kolben-Zylinderaggregat kann entweder der Innendurchmesser des Rohrkörpers in Richtung des Bodens abnehmen und/oder der Außendurchmesser des Rohrkörpers in Richtung des Bodens zunehmen.

Als ebenfalls sehr vorteilhaft hat es sich herausgestellt, wenn der Flächenbereich des Bodens eine Rippenstruktur aufweist. Trotz vergleichsweise geringerem Materialaufwand und damit Masse wird eine sehr große Gestaltfestigkeit erreicht.

Auch der Außendurchmesser des Rohrkörpers kann Rippen aufweisen, die in Richtung des Bodens verlaufen. Die Rippen im Rohrkörper müssen nicht über die gesamte Rohrkörperlänge ausgeführt sein. Besonders relevant ist ein Bereich, der unmittelbar am Boden angrenzt.

Im Hinblick auf eine gute Entformbarkeit des Schutzrohres gehen die Rippen am Außendurchmesser des Rohrkörpers in die Rippenstruktur des Bodens über.

Bei einer weiteren Ausführungsform weist der Rohrkörper eine Nennmaterialstärke auf, die im Stützbereich, der in den Boden übergeht, größer und konstant ausgeführt ist. Diese Variante kann z. B. mit einer Rippenstruktur am Boden und am Rohrkörper versehen sein.

### Kurze Beschreibung der Zeichnungen

Anhand der folgenden Figurenbeschreibung soll die Erfindung näher erläutert werden.

Es zeigt:
- Fig. 1: Kolben-Zylinderaggregat in Schnittdarstellung
- Fig. 2: Schutzrohr aus Fig. 1
- Fig. 3: Detailansicht zur Fig. 2
- Fig. 4 -7: Alternatiwariante mit Rippenstruktur
- Fig. 8 u. 9: Alternativvariante mit konstanter Materialstärke im Bereich des Bodens

### Bester Weg zur Ausführung der Erfindung

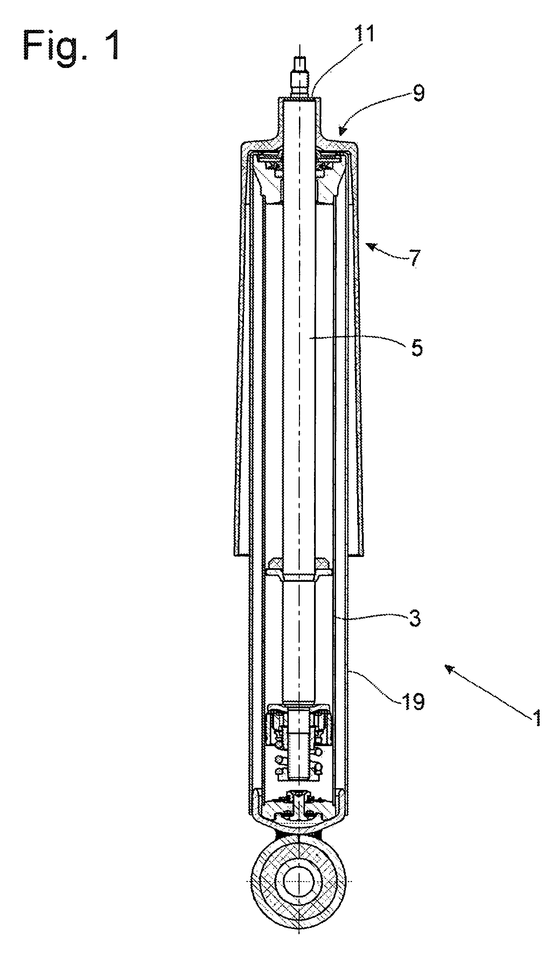

Die Fig. 1 zeigt ein im Aufbau bekanntes Kolben-Zylinderaggregat 1 in der Anwendung eines Schwingungsdämpfers. Innerhalb eines Zylinders 3 ist eine Kolbenstange 5 axial beweglich geführt. Ein aus dem Zylinder 3 ragender Abschnitt der Kolbenstange 5 wird von einem Schutzrohr 7 eingehüllt, das mit seinem endseitigen flaschenhalsförmigen Boden 9 auf einem Absatz 11 der Kolbenstange 5 axial und radial geführt ist.

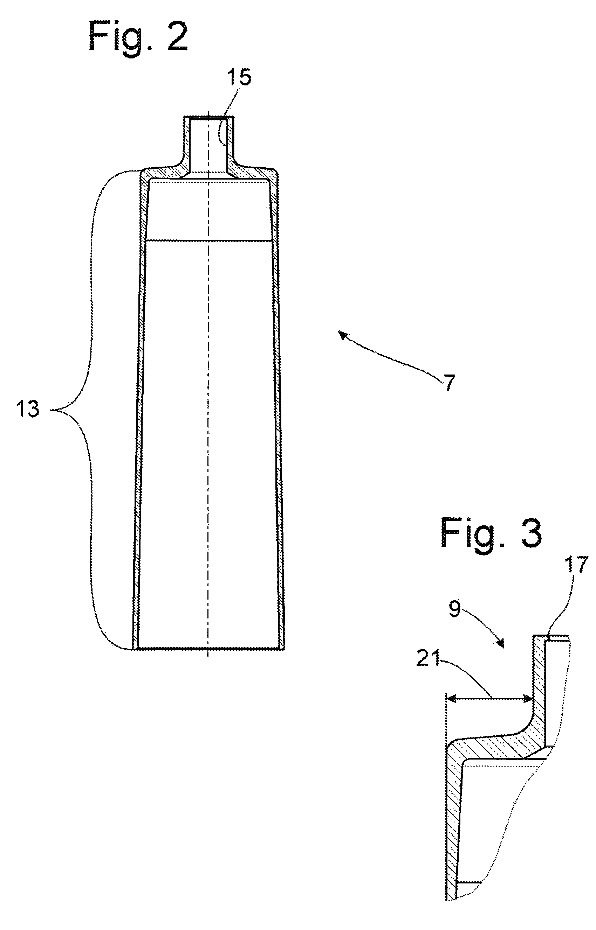

In der Fig. 2 ist das Schutzrohr 7 nach Fig. 1 als Einzelteil dargestellt. Zum besseren Verständnis dient zusätzlich die Figur 3, die sich auf endseitigen Boden 9 beschränkt. Das Schutzrohr 7 verfügt über einen Rohrkörper 13, der aus einem Kunststoff gefertigt ist. Auf dem größten Längenabschnitt verfügt der Rohrkörper 13 über eine konstante Wandstärke. Ggf. kann der Rohrkörper leicht trichterförmig geformt sein, wobei der Boden 9 an dem Ende mit dem kleineren Durchmesser ausgeführt ist.

Der flaschenhalsförmige Boden 9 verfügt über einen Führungsabschnitt 15, der unmittelbar auf der Mantelfläche der Kolbenstange 5 anliegt und für eine radiale Positionierung sorgt. An seinem dem Boden 9 gegenüberliegenden Ende weist der Führungsabschnitt 15 einen nach radial innen weisenden Rand 17 auf, der auf dem Absatz 11 der Kolbenstange 5 anliegt und damit die axiale Positionierung des Schutzrohres zur Kolbenstange 5 übernimmt.

Damit auch bei einer radialen Belastung des Schutzrohres 7 an seinem offenen Ende kein Kontakt zwischen dem Schutzrohr 7 und einem äußeren Zylinder 19 unterbleibt, verfügt der Boden 9 ausgehend von seinem äußeren Rand nach radial innen über eine zunehmende Materialanhäufung. In der Variante nach den Figuren 2 und 3 wird die Materialanhäufung durch eine Zunahme der Wandstärke erreicht. Zusätzlich wächst auch die Wandstärke des Rohrkörpers in Richtung des Bodens 9 an. Wie insbesondere aus der Fig. 3 hervorgeht, nimmt der Innendurchmesser des Rohrkörpers 13 in Richtung des Bodens 9 ab. Dadurch ergibt sich ein konisch verlaufender Querschnitt innerhalb der Wand des Rohrkörpers 13. Auch der Boden 9 verfügt über einen konischen Flächbereich 21, ausgehend vom äußeren Rand bis zum Führungsabschnitt 15, wobei die Innenseite des Bodens 9 rechtwinklig zur Längsachse der Kolbenstange 5 verläuft.

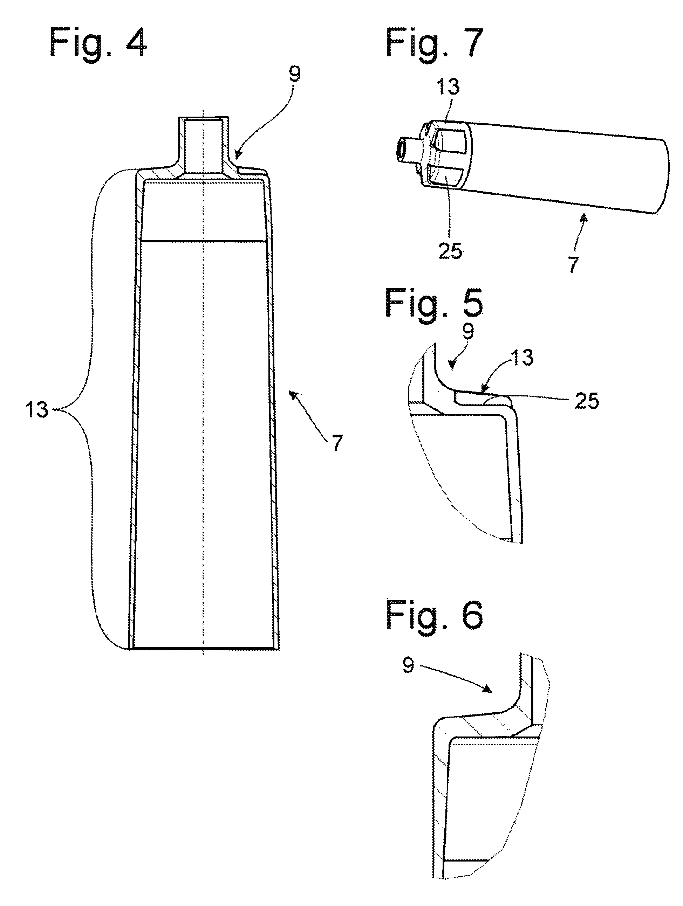

Die Zusammenschau der Fig. 4 bis 7 zeigen eine Schutzrohrvariante 7, die auf der Ausführung nach Fig. 2 aufbaut. Abweichend verfügt der Rohrkörper 13 am Außendurchmesser über Rippen 23, die in Richtung des Bodens 9 verlaufen. Dazu sind in einem Endabschnitt des Schutzrohres 9 konisch verlaufende Taschen 25 ausgeformt (Fig. 5) Die Rippen 23 am Außendurchmesser des Rohrkörpers 13 gehen in eine Rippenstruktur des Bodens über (Fig. 5 und Fig. 7).

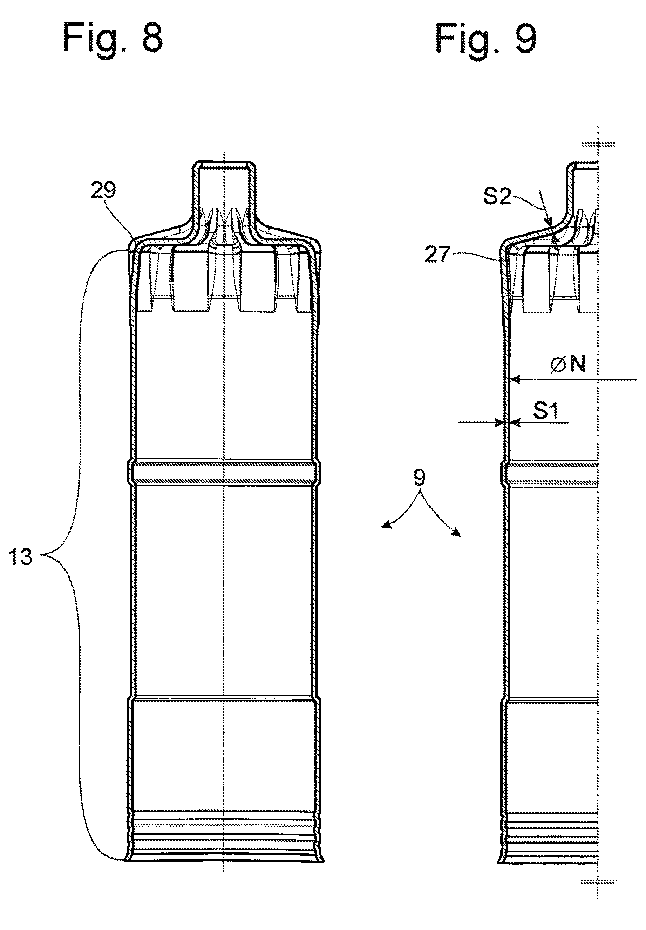

Eine besonders gewichtsoptimierte Variante eines Schutzrohres 7 ist in den Fig. 8 und 9 dargestellt. Der größte Teil des Rohrkörpers 13 verfügt über eine relativ dünne Wandstärke S₁. Ein Endabschnitt 27 des Rohrkörpers 13 weist in Richtung des Bodens 9 hingegen eine konstant größere Wandstärke S₂ auf als das restliche Schutzrohr. Ausgehend von einem Nenndurchmesser N des Schutzrohres nimmt der Außendurchmesser im Endbereich bis zum Boden 9 in einem Streifenprofil 29 zu. Dazwischen verläuft der Endbereich 27 konisch nach radial innen, so dass im Endbereich 27 des Rohrkörpers 13 und im Bodenbereich 9 bis zum Führungsabschnitt 15 durchgehende Sicken 31 entstehen, die ebenfalls eine Materialanhäufung darstellen und das Biegewiderstandsmoment des Schutzrohres deutlich ansteigen lassen.

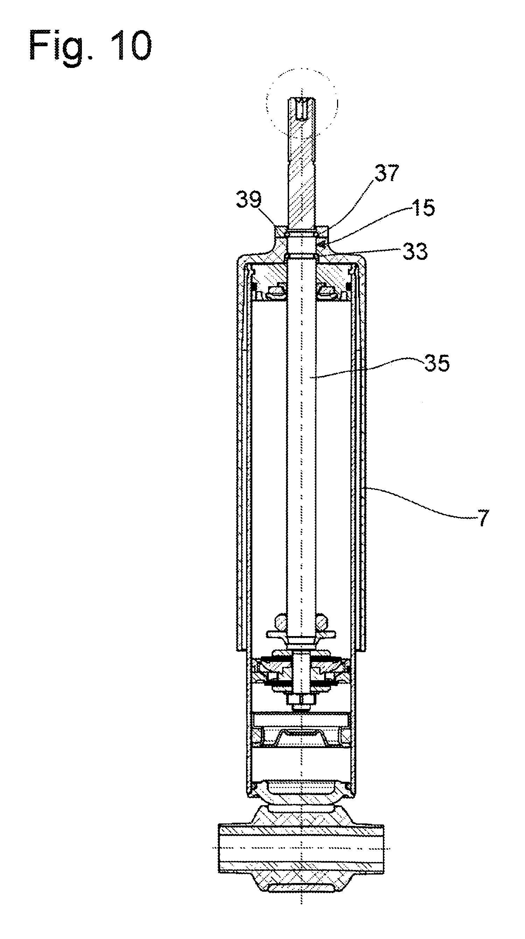

Die Varianten nach den Fig. 1 bis 9 zeigen jeweils Ausführungsformen von einem Schutzrohr 7, bei denen die axiale Fixierung über den radial innen weisenden Rand am Ende des Führungsabschnitts 15 erfolgt. Eine noch einfachere Lösung nach Fig. 10 zeichnet sich dadurch aus, dass das Schutzrohr 7 von einem ersten Absatz 33 einer Kolbenstange 35, gebildet von einem ersten Sicherungsring und einem zweiten Absatz 37 der Kolbenstange, ebenfalls gebildet von einem zweiten Sicherungsring axial zweiseitig gehalten wird. Die Sicherungsringe 33; 37 greifen jeweils an den Enden des Führungsabschnitts 15 an. Oberhalb des zweiten Sicherungsrings stützt sich ein Auflagering 39 für ein nicht dargestelltes Anschlussorgan ab, wobei die Fertigungstoleranzen derart gewählt sind, dass zwischen der Unterseite des Auflagerings 39 und der oberen Stirnfläche des Schutzrohres 7 zumindest ein Minimalabstand besteht, so dass keine Belastung des Anschlussorgans auf das Schutzrohr übertragen wird.

## Patentansprüche

1. Schutzrohr (7) für ein Kolben-Zylinderaggregat (1), umfassend einen Rohrkörper (13) mit einem endseitigen flaschenhalsförmigen Boden (9), der sich zumindest mittelbar an einer Kolbenstange (5) des Kolben-Zylinderaggregats (1) axial und radial abstützt,
**dadurch gekennzeichnet,**
**dass** ein Flächenbereich des flaschenhalsförmigen Bodens (9) ausgehend von seinem äußeren Rand nach radial innen eine zunehmende Materialanhäufung aufweist.

2. Schutzrohr nach Anspruch 1,
**dadurch gekennzeichnet,**
**dass** die Wandstärke des Bodens (9) nach radial innen zunimmt.

3. Schutzrohr nach Anspruch 1,
**dadurch gekennzeichnet,**
**dass** die Wandstärke des Rohrkörpers(13) in Richtung des Bodens (9) zunimmt.

4. Schutzrohr nach den Ansprüchen 1 oder 3,
**dadurch gekennzeichnet,**
**dass** der Innendurchmesser des Rohrkörpers (13) in Richtung des Bodens (9) abnimmt.

5. Schutzrohr nach den Ansprüchen 1 oder 3,
**dadurch gekennzeichnet,**
**dass** der Außendurchmesser des Rohrkörpers (13) in Richtung des Bodens (9) zunimmt.

6. Schutzrohr nach mindestens einem der Ansprüchen 1 bis 5,
**dadurch gekennzeichnet,**
**dass** der Flächenbereich des Bodens (9) eine Rippenstruktur (29; 31) aufweist.

7. Schutzrohr nach mindestens einem der Ansprüchen 1 bis 6,
**dadurch gekennzeichnet,**
**dass** der Außendurchmesser des Rohrkörpers (13) Rippen (23) aufweist, die in Richtung des Bodens (9) verlaufen.

8. Schutzrohr nach Anspruch 6,
**dadurch gekennzeichnet,**
**dass** die Rippen (23) am Außendurchmesser des Rohrkörpers (13) in die Rippenstruktur des Bodens (9) übergehen.

9. Schutzrohr nach einem der Ansprüche 1 bis 8,
**dadurch gekennzeichnet,**
**dass** der Rohrkörper (13) eine Nennmaterialstärke (S₁) aufweist, die im Endbereich, der in den Boden (9) übergeht, größer und konstant ausgeführt ist.

## Claims

1. Protective pipe (7) for a piston/cylinder assembly (1), comprising a pipe body (13) with an end-side bottleneck-shaped bottom (9) which is supported axially and radially at least indirectly on a piston rod (5) of the piston/cylinder assembly (1), **characterized in that** a surface region of the bottleneck-shaped bottom (9) has an increasing material build-up radially to the inside starting from its outer edge.

2. Protective pipe according to Claim 1, **characterized in that** the wall thickness of the bottom (9) increases radially to the inside.

3. Protective pipe according to Claim 1, **characterized in that** the wall thickness of the pipe body (13) increases in the direction of the bottom (9).

4. Protective pipe according to Claim 1 or 3, **characterized in that** the internal diameter of the pipe body (13) decreases in the direction of the bottom (9).

5. Protective pipe according to Claim 1 or 3, **characterized in that** the external diameter of the pipe body (13) increases in the direction of the bottom (9).

6. Protective pipe according to at least one of Claims 1 to 5, **characterized in that** the surface region of the bottom (9) has a rib structure (29; 31).

7. Protective pipe according to at least one of Claims 1 to 6, **characterized in that** the external diameter of the pipe body (13) has ribs (23) which extend in the direction of the bottom (9).

8. Protective pipe according to Claim 6, **characterized in that** the ribs (23) on the external diameter of the pipe body (13) merge into the rib structure of the bottom (9).

9. Protective pipe according to one of Claims 1 to 8, **characterized in that** the pipe body (13) has a nominal material strength (S₁) which is configured to be constant and greater in the end region which merges into the bottom (9).

## Revendications

1. Tube protecteur (7) pour une unité cylindre-piston (1), comprenant un corps tubulaire (13) avec un fond (9) en forme de goulot de bouteille du côté de l'extrémité, qui s'appuie au moins indirectement axialement et radialement contre une tige de piston (5) de l'unité cylindre-piston (1),
**caractérisé en ce**
**qu'**une région de surface du fond (9) en forme de goulot de bouteille présente, partant de son bord extérieur radialement vers l'intérieur, une accumulation de matière croissante.

2. Tube protecteur selon la revendication 1,
**caractérisé en ce que**
l'épaisseur de paroi du fond (9) augmente radialement vers l'intérieur.

3. Tube protecteur selon la revendication 1,
**caractérisé en ce que**
l'épaisseur de paroi du corps tubulaire (13) augmente dans la direction du fond (9).

4. Tube protecteur selon l'une quelconque des revendications 1 ou 3,
**caractérisé en ce que**
le diamètre intérieur du corps tubulaire (13) diminue dans la direction du fond (9).

5. Tube protecteur selon l'une quelconque des revendications 1 ou 3,
**caractérisé en ce que**
le diamètre extérieur du corps tubulaire (13) augmente dans la direction du fond (9).

6. Tube protecteur selon au moins l'une quelconque des revendications 1 à 5,
**caractérisé en ce que**
la région de surface du fond (9) présente une structure nervurée (29 ; 31).

7. Tube protecteur selon au moins l'une quelconque des revendications 1 à 6,
**caractérisé en ce que**
le diamètre extérieur du corps tubulaire (13) présente des nervures (23) qui s'étendent dans la direction du fond (9).

8. Tube protecteur selon la revendication 6,
**caractérisé en ce que**
les nervures (23) sur le diamètre extérieur du corps tubulaire (13) se prolongent par la structure nervurée du fond (9).

9. Tube protecteur selon l'une quelconque des revendications 1 à 8,
**caractérisé en ce que**
le corps tubulaire (13) présente une épaisseur de matériau nominale (S₁) qui est réalisée dans la région d'extrémité qui se prolonge par le fond (9) de manière plus grosse et constante.
